# EUROPEAN PATENT SPECIFICATION

(11) **EP 1 066 157 B1**
(45) Date of publication and mention of the grant of the patent: **14.05.2003**
(21) Application number: 99914856.2
(22) Date of filing: 24.03.1999
(51) Int. Cl.: B31F 5/04

(54) **METHOD AND DEVICE IN CONNECTION WITH PAPER-LINING OF SHEETS**
VERFAHREN UND GERÄT IN VERBINDUNG MIT DEN PAPIERSCHICHTEN VON FOLIEN
PROCEDE ET DISPOSITIF UTILISES EN RELATION AVEC LE DOUBLAGE DE FEUILLES AVEC DU PAPIER

(30) Priority: 27.03.1998 SE 9801046
(43) Date of publication of application: 10.01.2001
(73) Proprietor: Lamina System Aktiebolag, 502 47 Boras (SE)
(72) Inventor: NYMAN, Lennart, S-513 50 SPARSÖR (SE)
(74) Representative: Hynell, Magnus
(86) International application number: SE9900460
(87) International publication number: WO99050055

(56) References cited:
- EP-A2- 0 064 961
- WO-A1-95/14631
- WO-A1-97/29905
- US-A- 3 547 013
- US-A- 4 496 417

## Description

### TECHNICAL FIELD

The present invention relates to a method in connection with paper-lining of sheets, and a device for its accomplishment.

### BACKGROUND OF THE INVENTION

The present invention relates to devices in connection with the paper-lining of flat objects. In paper-lining, two sheets, often one cardboard or corrugated board sheet and one printed paper sheet, one of the sheets being coated with adhesive, are fed to a joining point and are joined together by aid of rolls or rollers.

If the other side of the cardboard or the corrugated board also is to be lined with a paper sheet, which is often a requirement for signboards which are to be placed in a shop to provide advertising on both sides thereof and to avoid bending of the sheets due to the sheets only being laminated on one side, it is conventional to collect the paper-lined sheets, turn them, and to feed them into the paper-lining machine for paper-lining them on the other side. Usually, this operation is performed manually, which is often burdensome and inconvenient. Moreover, the second paper-lining should preferably be made relatively soon after the first one, in order for the sheets not to bend, which otherwise renders the second paper-lining more difficult.

In WO97/29905 is described a method and device for single paper-lining of sheets.

### SHORT ACCOUNT OF THE INVENTION

The object of the present invention is to eliminate the above problems in connection with paper-lining. According to one aspect of the invention, this is achieved by a method which is characterised in that a sheet is paper-lined with a first layer on one side thereof, is turned to position the underneath side upwards, and that the uncoated side is paper-lined with a second layer, whereby the edge of the sheet and the first layer, hereinafter denoted register edge, which is used in the orientation of these in the first paper-lining, constitutes the register edge for the second paper-lining.

According to another aspect ofthe invention, this is achieved by a device which is characterised in that it comprises a turning means which is arranged after the discharge from a first paper-lining machine, as seen in its feeding direction, which turning means is capable of turning a paper-lined sheet so that its top side is positioned downwards, a feeding means, arranged after the turning means, capable of feeding the turned sheet onwards in a feeding direction and into a second paper-lining machine, which is capable of paper-lining the sheet on the uncoated side, whereby the edge of the sheet and the first layer, hereinafter denoted register edge, which is used in the orientation of these in the first paper-lining, constitutes the register edge for the second paper-lining.

Several advantages are obtained with the above mentioned method and device. Double paper-lining, i.e. coating on both sides of a carrier sheet, may be obtained in one operation. The sheets are, moreover, arranged so that the same edge, the register edge, at which the sheets are oriented in the paper-lining, are used for both the paper-linings.

The present invention provides an excellent flexibility in paper-lining, and enables avoiding of the burdensome and time consuming manual handling of sheets, in connection with paper-lining.

Additional aspects of and advantages with the present invention will be apparent from the detailed description of a preferred embodiment, and from the enclosed claims.

### SHORT DESCRIPTION OF THE FIGURES

In the following description of a preferred embodiment, there will be referred to the enclosed figures, of which
- Fig. 1: is showing a side view of a paper-lining machine and a turning means which is part of the present invention, and
- Fig. 2: schematically is showing a view of the top side of the device in Fig. 1.

### DESCRIPTION OF A PREFERRED EMBODIMENT

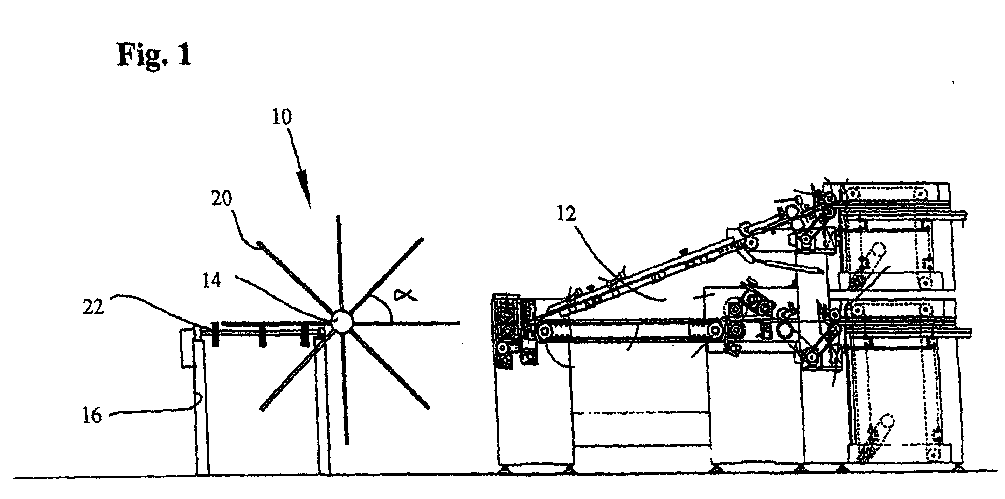

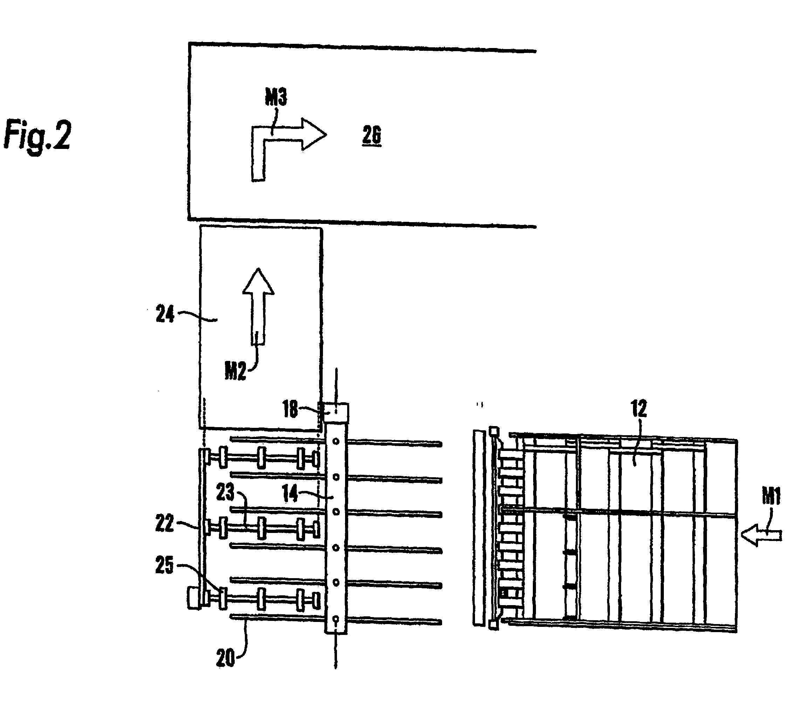

In Fig. 1 and 2, a paper-lining machine is generally referred to with the reference numeral 12. In the paper-lining machine, a bottom, adhesive coated, carrier layer is joined with a top coat layer, most often with some type of printing. The layers are oriented in relation to each other, registered, along their front edges, seen in the feeding direction of the machine, to obtain a good fit between the layers. After the joining, the sheet is fed out from the sheet paper-lining machine.

After the paper-lining machine, seen in the feeding direction, a turning means 10 is arranged. The turning means comprises a shaft 14, which is rotatably journalled in bearings in a stand 16, and oriented perpendicularly to the feeding direction, M1. The shaft is rotated by aid of a suitable motor 18. A number of sticks 20 are arranged *on* the shaft, both parallel to the shaft and with a certain angle α in relation to each other, in the shown embodiment 8 sticks which are distributed about the circumference of the shaft with a partition of 45°. The motor is equipped with a suitable control, to stop the shaft when a number of sticks are essentially horizontal and directed towards the discharge of the paper-lining machine. When one sheet has been discharged from the paper-lining machine and is lying on the sticks, the motor receives a signal and turns the shaft the angle α, until the next row of sticks are positioned.

A feeding means 22 is arranged on the other side of the turning means, which feeding means transports the sheet, when the shaft has been rotated so that a sheet is positioned on it, in a direction M2 which is parallel to the shaft, i.e. perpendicular to the discharge direction M1 from the paper-liner. The feeding means 22 is provided with a number of shafts 23, with a common drive motor. A number of rolls 25 are fixedly attached to the shafts. The shafts are arranged so that the sticks 20 can move freely between them at the rotation of the shaft 14.

According to one embodiment, the sheet is fed via a second feeding means 24, arranged downstream, in the feeding direction M2. The sheet is thereafter fed onwards into the lower hopper of a second paper-lining machine 26, the register edge of the first paper-lining ending up in the front in the feeding direction M3 for the second paper-lining machine. The second paper-lining machine 26 is of the same type as the first one, and is therefore only schematically shown in Fig. 2. From the lower hopper, the sheet is fed into the machine, is coated with adhesive and is paper-lined with a second top coat layer. Due to the sheet having been oriented at the paper-lining as is described above, the same register edge is used in the second paper-lining machine 26, which is important in double paper-lining. Accordingly, a double paper-lining is achieved in a continuous operation.

It is to be understood that the invention is not limited to the embodiment described above and shown in the figures, but may be modified within the scope of the enclosed claims.

## Claims

1. Method in connection with paper-lining, **characterised in that** a sheet is paper-lined (12) with a first layer on one side thereof is turned (10) to position the underneath side upwards, and that the uncoated side is paper-lined (26) with a second layer, whereby the edge of the sheet and the first layer, hereinafter denoted register edge, which is used in the orientation of these in the first paper-lining (12), constitutes the register edge for the second paper-lining (26).

2. Method according to claim 1, **characterised in that** the sheet, after the turning (10), is fed onwards (22, 24) for the second paper-lining (26), in a feeding direction (M2) which is essentially perpendicular to the feeding direction (M1) in the first paper-lining (12), and **in that** the feeding direction (M3) for the second paper-lining (26) is essentially perpendicular to the feeding direction (M2) after the turning (10).

3. Device in connection with paper-lining, **characterised in that** it comprises
- a turning means (10) which is arranged after the discharge from a first paper-lining machine (12), as seen in its feeding direction (M1), capable of turning a paper-lined sheet so that its top side is positioned downwards,
- a feeding means (22, 24), arranged after the turning means (10), capable of feeding the turned sheet onwards in a feeding direction (M2) and into
- a second paper-lining machine (26), which is capable of paper-lining the sheet on the uncoated side, whereby the edge of the sheet and the first layer, hereinafter denoted register edge, which is used in the orientation of these in the first paper-lining, constitutes the register edge for the second paper-lining.

4. Device according to claim 3, **characterised in that** the feeding means (22, 24) is feeding the turned sheets in a direction (M2), which is essentially perpendicular to the feeding direction (M1) from the first paper-lining machine (12).

5. Device according to claim 4, **characterised in that** the second paper-lining machine (26) is arranged in relation to the feeding means (22, 24), so that the feeding direction (M3) of the second paper-lining machine is essentially perpendicular to the feeding direction (M2) of the feeding means.

6. Device according to claim 3, **characterised in that** the turning means (10) comprises a rotatable shaft (14), which is oriented perpendicularly to the feeding direction (M1) of the first paper-lining machine, a number of sticks (20), arranged both parallel to the shaft and with a certain angle (α) in relation to each other, seen about the circumference of the shaft.

7. Device according to claim 6, **characterised in** means (18) capable of rotating the shaft (14) this angle (α) after a paper-lined sheet having been discharged from the first paper-lining machine (12) and fed into the turning means (10).

## Patentansprüche

1. Verfahren in Verbindung mit Papier-Beschichtung, **dadurch gekennzeichnet, dass** ein Bogen mit einer ersten Lage auf dessen einer Seite mit Papier beschichtet (12) wird, gedreht (10) wird, um die untere Seite nach oben zu positionieren, und dass die unbedeckte Seite mit einer zweiten Lage mit Papier beschichtet (26) wird, wobei der Rand des Bogens und die erste Lage, im Folgenden als Passkante bezeichnet, welche zur Ausrichtung dieser in der ersten Papier-Beschichtung (12) benutzt wird, die Passkante für die zweite Beschichtung (26) bildet.

2. Verfahren gemäß Anspruch 1, **dadurch gekennzeichnet, dass** der Bogen nach der Drehung (10) vorwärts (22, 24) zu der zweiten Papier-Beschichtung (26) in einer Zuführungsrichtung (M2) zugeführt wird, welche im wesentlichen senkrecht zu der Zuführungsrichtung (M1) in der ersten Papier-Beschichtung (12) ist, und dadurch, dass die Zuführungsrichtung (M3) für die zweite Papier-Beschichtung (26) im wesentlichen senkrecht zu der Zuführungsrichtung (M2) nach der Drehung (10) ist.

3. Vorrichtung in Verbindung mit Papier-Beschichtung, **dadurch gekennzeichnet, dass** sie umfasst
- ein Drehmittel (10), das hinter dem Auswurf einer ersten, in Zuführungsrichtung (M1) gesehenen Papier-Beschichtungsmaschine (12), angeordnet ist, und imstande ist, einen mit Papier beschichteten Bogen derart zu drehen, dass dessen obere Seite nach unten positioniert wird,
- ein Zuführungsmittel (22,24), das hinter dem Mittel (10) zum Drehen angeordnet ist, und imstande ist, den gedrehten Bogen vorwärts in einer Zuführungsrichtung (M2) und in
- eine zweite Papier-Beschichtungsmaschine (26) zuzuführen, die imstande ist, den Bogen auf der unbedeckten Seite mit Papier zu beschichten, wobei der Rand des Bogens und die erste Lage, im Folgenden als Passkante bezeichnet, welche zur Ausrichtung dieser in der ersten Papier-Beschichtung (12) benutzt wird, die Passkante für die zweite Papier-Beschichtung (26) bildet.

4. Vorrichtung gemäß Anspruch 3, **dadurch gekennzeichnet, dass** das Zuführungsmittel (22,24) die gedrehten Bögen in einer Richtung (M2) zuführt, die im wesentlichen senkrecht zur Zuführungsrichtung (M1) von der ersten Papier-Beschichtungsmaschine (12) ist.

5. Vorrichtung gemäß Anspruch 4, **dadurch gekennzeichnet, dass** die zweite Papier-Beschichtungsmaschine (26), in Bezug auf das Zuführungsmittel (22, 24) derart angeordnet ist, dass die Zuführungsrichtung (M3) der zweiten Papier-Beschichtungsmaschine im wesentlichen senkrecht zu der Zuführungsrichtung (M2) des Zuführungsmittels ist.

6. Vorrichtung gemäß Anspruch 3, **dadurch gekennzeichnet, dass** um den Umfang der Welle herum betrachtet, das Mittel (10) zur Drehung eine drehbare Welle (14), die senkrecht zur Zuführungsrichtung (M1) der ersten Papier-Beschichtungsmaschine ausgerichtet ist, eine Anzahl von Stäben (20) umfasst, die sowohl parallel zur Welle als auch in einem bestimmten Winkel (α) in Bezug zueinander angeordnet sind.

7. Vorrichtung gemäß Anspruch 6, **dadurch gekennzeichnet, dass** Mittel (18) imstande ist, die Welle (14) um diesen Winkel (α) zu drehen, nachdem ein mit Papier beschichteter Bogen von der ersten Papier-Beschichtungsmaschine (12) ausgeworfen und dem Mittel (10) zum Drehen zugeführt wurde.

## Revendications

1. Procédé utilisé en liaison avec le doublage avec du papier, **caractérisé en ce qu'**on réalise un doublage d'une feuille avec du papier (12) en appliquant une première couche sur une face de la feuille, qu'on exécute un retournement (10) pour positionner vers le haut la face située vers le bas, et qu'on réalise un doublage (26) de la face non recouverte par du papier, en utilisant une seconde couche, ce qui a pour effet que le bord de la feuille et de la première couche, désigné ci-après comme étant un bord de repère, qui est utilisé pour l'orientation de ces éléments dans le premier doublage (12) avec du papier, constitue le bord de repère pour le second doublage (26) avec du papier.

2. Procédé selon la revendication 1, **caractérisé en ce qu'**après le retournement (10), on fait avancer la feuille (22, 24) pour le second doublage avec du papier (26), dans une direction d'avance (M2) qui est essentiellement perpendiculaire à la direction d'avance (M1) du premier doublage avec du papier (12), et que la direction d'avance (M3) pour le second doublage (26) avec du papier est essentiellement perpendiculaire à la direction d'avance (M2) après le retournement (10).

3. Dispositif utilisé en liaison avec le doublage par du papier, **caractérisé en ce qu'**il comprend:
- des moyens de retournement (10), qui sont agencés de telle sorte qu'après l'évacuation à partir d'une première machine (12) de doublage avec du papier, lorsqu'on regarde dans la direction d'avance (M1), ils soient capable de retourner une feuille doublée par du papier de manière que sa face supérieure soit tournée vers le bas,
- des moyens d'avance (22, 24) agencés en aval des moyens de retournement (10) de manière à pouvoir faire avancer la feuille retournée dans une direction d'avance (M2), et dans
- une seconde machine (26) de doublage par du papier, qui est à même de doubler par du papier la face non recouverte, le bord de la feuille et de la première couche, désigné ci-après comme étant un bord de repère, qui est utilisé pour l'orientation de ces éléments dans le premier doublage avec du papier, constitue le bord de repère pour le second doublage avec du papier.

4. Dispositif selon la revendication 3, **caractérisé en ce que** les moyens d'avance (22, 24) font avancer les feuilles retournées dans une direction (M2) qui est essentiellement perpendiculaire à la direction d'avance (M1) à partir de la première machine (12) de doublage avec du papier.

5. Dispositif selon la revendication 4, **caractérisé en ce que** la seconde machine (26) de doublage avec du papier est disposée par rapport aux moyens d'avance (22, 24) de telle sorte que la direction d'avance (M3) de la seconde machine de doublage avec du papier est essentiellement perpendiculaire à la direction d'avance (M2) des moyens d'avance.

6. Dispositif selon la revendication 3, **caractérisé en ce que** les moyens de retournement (10) comprennent un arbre rotatif (14), qui est orienté perpendiculairement à la direction d'avance (M1) de la première machine de doublage avec du papier, un certain nombre de tiges (20) disposées à la fois parallèlement à l'arbre et de manière à faire un certain angle (α) entre elles, lorsqu'on regarde autour de la circonférence de l'arbre.

7. Dispositif selon la revendication 6, **caractérisé par** des moyens (18) aptes à faire tourner l'arbre (14) de cet angle (α) après que la feuille pourvue d'un doublage en papier a été évacuée de la première machine (12) de doublage avec du papier et a pénétré dans les moyens de retournement (10).
